# EUROPEAN PATENT APPLICATION

(11) **EP 2 375 008 A1**
(43) Date of publication of application: **12.10.2011**
(21) Application number: 10159677.3
(22) Date of filing: 12.04.2010
(51) Int. Cl.: F01D 25/28, F02C 7/20

(54) **Gas turbine support arrangement**

(71) Applicant: Alstom Technology Ltd, 5400 Baden (CH)
(72) Inventor: Busekros, Armin, 8049 Zürich (CH); Brühwiler, Eduard, 5300 Turgi (CH); Savor, Jasna, 5400 Baden (CH); Cindric, Miroslav, 47000 Karlovac (HR)

(57) **Abstract**

The gas turbine arrangement (1) comprises a casing (10) supported by rod shaped elements (7, 8) connected to a base frame (11). In a plane perpendicular to a longitudinal gas turbine axis (12), some of the rod shaped elements (8) have a longitudinal axis (13) that is inclined with respect to a gas turbine vertical axis (14).

## Description

### TECHNICAL FIELD

The present invention relates to a gas turbine arrangement; in particular in the following reference to a gas turbine arrangement connected to a generator through a coupling is made.

### BACKGROUND OF THE INVENTION

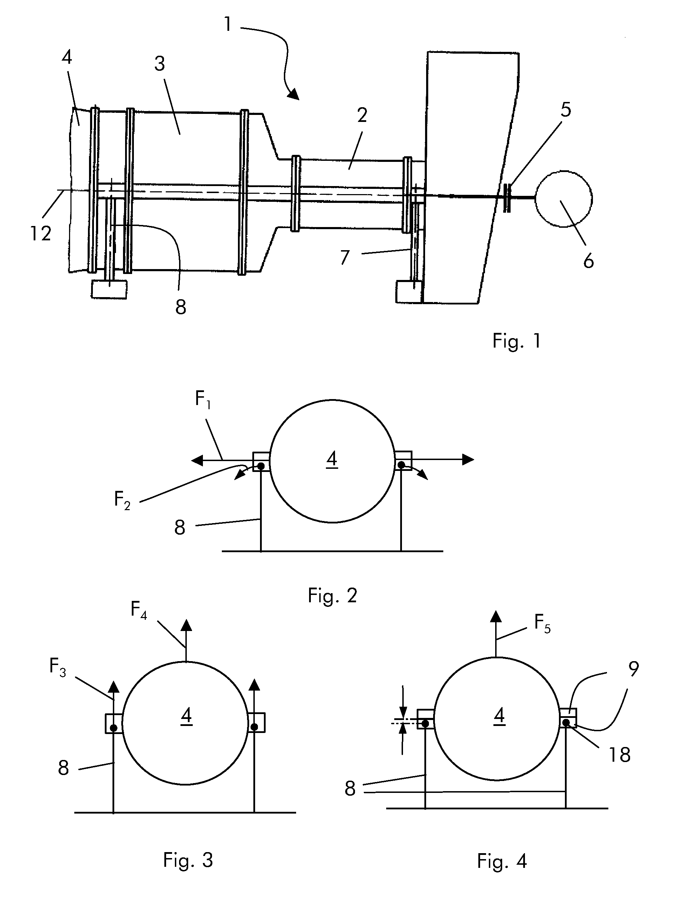

In the following reference to figure 1, that shows a portion of a traditional gas turbine arrangement, is made.

Gas turbine arrangements 1 are known to comprise a compressor 2 followed by a combustion chamber 3 and a turbine 4.

The shaft of the turbine and compressor (they share the same shaft) is connected through a coupling 5 to an electric generator 6.

In addition, in order to support the gas turbine, rod shaped elements 7 and 8 are provided.

In particular, rod shaped elements 7 are connected to a cold zone of the arrangement 1 (i.e. close to the compressor 2) and are vertically arranged.

Rod shaped elements 8 are connected to a hot zone of the arrangement 1 (i.e. close to the combustion chamber 3 and/or turbine 4, in this zone the casing temperature can reach 400/450°C) and are likewise vertically arranged.

During operation, the casing in the zone of the combustion chamber 3 and turbine 4 and the rod shaped elements 8 deform in a large extent.

With reference to figures 2-4, the following deformations in particular occur.

Casing deformation (figure 2): when the temperature increases the casing deforms increasing its diameter (arrow F₁); this, combined with the links of the rod shaped elements 8, causes the casing to move downwardly (arrow F₂).

Rod shaped element deformation (figure 3): when the temperature increases the rod shaped elements 8 deform increasing their length (arrow F₃); this causes the casing to move upwards (arrow F₄).

Hinge displacement deformation (figure 4): the hinges 18 connecting the rod shaped elements 8 to the casing are usually not placed between the flanges 9 of the upper and lower casing shell, but are connected to only one of them (typically the lower one). Thus, when the temperature increases and the casing deforms, also the casing flanges to which the hinges are connected deform; also this effect causes the casing to move upwards (arrow F₅).

In contrast, because of the much lower temperatures, the casing in the zone of the compressor 2 and the rod shaped elements 7 deforms in a much lower extent.

Finally, the generator 6 maintains nearly the same level.

These different deformations induce, during operation, a large stress into the coupling 5 and the parts of the shaft close to it.

### SUMMARY OF THE INVENTION

The technical aim of the present invention is therefore to provide a gas turbine arrangement by which the said problems of the known art are eliminated.

Within the scope of this technical aim, an aspect of the invention is to provide a gas turbine arrangement by which the stress, which during operation is induced into the coupling and shaft parts close to it, is sensibly reduced.

The technical aim, together with these and further aspects, are attained according to the invention by providing a gas turbine arrangement in accordance with the accompanying claims.

### BRIEF DESCRIPTION OF THE DRAWINGS

Further characteristics and advantages of the invention will be more apparent from the description of a preferred but non-exclusive embodiment of the gas turbine arrangement illustrated by way of non-limiting example in the accompanying drawings, in which:
Figure 1 is a schematic view of a traditional gas turbine arrangement;
Figures 2-4 are sketches showing the principles according to which the casing and rod shaped elements deform;
Figure 5 shows a gas turbine arrangement in an embodiment of the invention.

### DETAILED DESCRIPTION OF EMBODIMENTS OF THE INVENTION

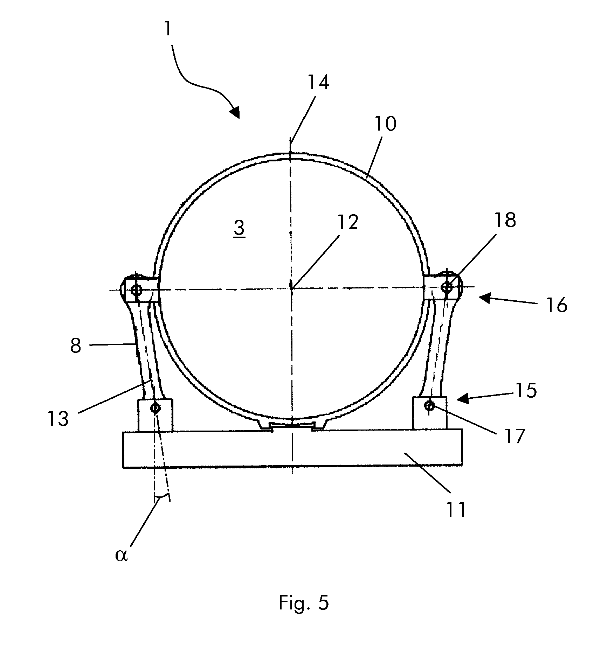

With reference to figure 5, it shows a gas turbine arrangement 1 wherein like reference numerals designate identical or corresponding parts to those already described.

The gas turbine arrangement 1 comprises a casing 10 supported by rod shaped elements; in particular in the following reference to the rod shaped elements 8 is made, i.e. to the rod shaped elements connected in correspondence of casing zones of the combustion chamber 3 and/or turbine 4.

The rod shaped elements 8 are connected between the casing 10 and a base frame 11.

Advantageously, in a plane perpendicular to a longitudinal gas turbine axis 12, at least a portion of the rod shaped elements 8 has a longitudinal axis 13 that is inclined with respect to a gas turbine vertical axis 14.

The other rod shaped elements (identified by reference numeral 7 in figure 1) are not shown in figure 5 since they generally are of traditional type, i.e. they are vertical rod shaped elements connected to the cold zone of the casing 10. Naturally the rod shaped elements 7 may also have a configuration similar to the one of the rod shaped elements 8 and thus be inclined with respect to the axis 14.

In particular, a part 15 of the rod shaped elements 8 connected to the base frame 11 is closer to the gas turbine vertical axis 14 than a part 16 of the rod shaped elements 8 connected to the casing 10.

Advantageously, an angle α between the gas turbine vertical axis 14 (or an axis parallel thereto) and the longitudinal axes 13 of the inclined portions of the rod shaped elements 8 is comprised between 4-33°.

In a preferred embodiment, the rod shaped elements 8 are straight elements (i.e. they are straight over their whole length) and the parts 15, 16 connected respectively to the base frame 11 and to the casing 10 comprise hinges 17, 18.

Thus, the longitudinal axes 13 are defined between the hinges 17, 18.

The operation of the gas turbine arrangement 1 is apparent from that described and illustrated and is substantially the following.

During operation the casing zones in correspondence to the compressor 2 expand in a small extent or do not significantly expand at all and also the rod shaped elements 7 do not significantly expand.

Therefore the level of the gas turbine does not vary (or do not vary in an appreciable manner) in correspondence to the rod shaped elements 7.

Likewise, also the generator 6 connected to the gas turbine maintains nearly the same level.

In contrast, the casing zones in correspondence to the combustion chamber 3 and turbine 4 expand in a large extent and, correspondingly, also the rod shaped elements 8 connected thereto expand.

In particular, the casing 10 expands lowering its position (according to the principles described with reference to figure 2) and the rod shaped elements 8 expand causing the casing 10 to move upwards (according to the principles described with reference to figure 3). In addition, in case the hinges 18 are not placed between the two flanges but are embedded in one of the flanges (typically the lower one) the deformation of this flange causes the casing 10 to move upwards (according to the principles described with reference to figure 4).

Even if lowering of the casing is very small, it was surprisingly ascertained that, in case the rod shaped elements are inclined as described, it is possible to compensate all the deformations that causes the casing 10 to move upwards and downwards, such that it substantially maintains the same level (i.e. it does not move vertically). In fact such a particular configuration of the rod shaped elements causes the downwards movement of the casing 10 to be amplified.

Thus, since the gas turbine maintains the same level at the rod shaped elements 7 and 8, and also the generator 6 maintains the same level, no stress is induced into the coupling and shaft parts close threto.

Naturally the features described may be independently provided from one another.

In practice the materials used and the dimensions can be chosen at will according to requirements and to the state of the art.

### REFERENCE NUMBERS

- 1: gas turbine arrangement
- 2: compressor
- 3: combustion chamber
- 4: turbine
- 5: coupling
- 6: electric generator
- 7: rod shaped elements
- 8: rod shaped elements
- 9: flanges
- 10: casing
- 11: base frame
- 12: longitudinal axis of 1
- 13: longitudinal axis of 8
- 14: vertical axis of 1
- 15: part of 8
- 16: part of 8
- 17: hinge
- 18: hinge
- F₁: casing deformation
- F₂: casing movement caused by F₁
- F₃: rod shaped element deformation
- F₄: casing movement caused by F₃
- F₅: casing movement caused by flanges deformation
- α: angle between 14 (or an axis parallel thereto) and 13

## Claims

1. Gas turbine arrangement (1) comprising a casing (10) supported by rod shaped elements (7, 8) connected to a base frame (11), **characterised in that**, in a plane perpendicular to a longitudinal gas turbine axis (12), at least a portion of some of the rod shaped elements (8) has a longitudinal axis (13) that is inclined with respect to a gas turbine vertical axis (14).

2. Gas turbine arrangement (1) as claimed in claim 1, **characterised in that** a part (15) of the rod shaped elements (8) with inclined longitudinal axis (13) connected to the base frame (11) is closer to the gas turbine vertical axis (14) than a part (16) connected to the casing (10).

3. Gas turbine arrangement (1) as claimed in claim 2, **characterised in that** an angle (α) between the gas turbine vertical axis (14) or an axis parallel thereto and the longitudinal axes (13) of the inclined portions of the rod shaped elements (8) is comprised between 4-33°.

4. Gas turbine arrangement (1) as claimed in claim 3, **characterised in that** said rod shaped elements (8) are straight elements.

5. Gas turbine arrangement (1) as claimed in claim 4, **characterised in that** the parts (15, 16) of the rod shaped elements (8) connected to the base frame (11) and to the casing (10) comprise hinges (17, 18).

6. Gas turbine arrangement (1) as claimed in claim 5, **characterised in that** the longitudinal axes (13) of the rod shaped elements (8) are defined between the hinges (17, 18).

7. Gas turbine arrangement (1) as claimed in claim 6, **characterised in that** said inclined rod shaped elements (8) are connected in correspondence to a combustion chamber (3) or turbine (4) zone of the casing (10).
